# EUROPEAN PATENT APPLICATION

(11) **EP 1 862 975 A1**
(43) Date of publication of application: **05.12.2007**
(21) Application number: 06712199.6
(22) Date of filing: 23.01.2006
(51) Int. Cl.: G06T 17/40, A63F 13/00

(54) **IMAGE GENERATION DEVICE, AUTOMATIC ARRANGEMENT METHOD, RECORDING MEDIUM, AND PROGRAM**

(30) Priority: 25.01.2005 JP 2005017224
(71) Applicant: Konami Digital Entertainment Co., Ltd., Minato-ku Tokyo 107-8324 (JP)
(72) Inventor: NAGAYAMA, Kentaro, c/o Konami Digital Enternainment Co., Ltd., Minato-ku, Tokyo 107-8324 (JP)
(74) Representative: Rüger, Barthelt & Abel Patentanwälte
(86) International application number: PCT/JP2006/300983
(87) International publication number: WO 2006/080281

(57) **Abstract**

A parts model storage unit (203) stores a plurality of parts models. A combination data storage unit (204) stores combination data prescribing a combination part composed by combining the parts models. A contour generation unit (201) generates a contour of each cell for arrangement of parts. The parts arrangement evaluation unit (205) evaluates whether the prescribed combination part can be arranged on each cell, and stores the combination data or the like that are evaluated as being arrangeable, to an arrangement candidate storage unit (206). A parts selection unit (207) selects one combination part from combination data or the like stored in the arrangement candidate storage unit (206). Then, the image rendering unit (208) renders a three-dimensional image in which the selected combination part is arranged on a cell:

## Description

### Technical Field

The present invention relates to an image generation device, automatic arrangement method, recording medium and program which are suitable for automatically generating a three-dimensional image with enhanced reality.

### Background Art

Conventionally, various games (software or the like) which are executed by a video game device or the like have been developed. Of the games, generally called role playing games are incorrigibly popular and supported by players of a wide range of age groups.
This role playing game is of a type in which a main character (local character) achieves a final goal while being grown in a virtual world (virtual space). For example, the player ventures in virtual space through the main character, battles with an enemy character with whom the player meets on a field or at a dungeon or so to improve the experience point and the capability point of the main character. Then, the player tries to solve a problem with a greater difficulty according to the growth of the main character while collecting items needed and reading a riddle or the like. As the solution of the problem progresses, the identity of the enemy boss character to be a final goal becomes apparent, so that the player beats the enemy boss character to end the adventure.

In such a role playing game, a cave, a palace or the like is generally expressed as a dungeon (maze or the like). In the dungeon, the player often meets an enemy character or can acquire a more important item or the like. Accordingly, the player conquers the dungeon to quicken the growth of the main character or acquires an important item to progress the solution of the problem.
Although a type which displays a predetermined map (fixed map with fixed arrangement of a path and various kinds of objects) of such dungeon was typical, a game of a type which automatically creates different maps (random maps) becomes known recently.

As one example ofthis type of game, the technology of a video game device capable of creating a maze with a complicated shape is disclosed (e.g., see Patent Document 1).
Patent Document 1: Unexamined Japanese Patent Application KOKAI Publication No. 2001-96067 (pp. 6-10, FIG. 2)

### Disclosure of Invention

### Problems to be solved by the invention

While the aforementioned role playing game is originally displayed two-dimensionally (displayed on a plane), three-dimensional display (stereoscopic display) has been introduced recently. That is, a display with a three-dimensional map is demanded even for a dungeon or the like.
A method of arranging a plurality of block images of a plurality of kinds (block images having three-dimensional shapes) and prepared in advance at random is used for automatically generating a three-dimensional map. In this case, the arrangement of block images lacks regularity even in broad terms, and the impression of the three-dimensional images for a user is, indeed, that the generated images are just the products of the random generation.

That is, the generated three-dimensional map is little different from a conventional two-dimensional map, because the automatic generation is nothing more than one in which three-dimensional block images selected at random just take place of the conventional plain images. Therefore the problem is that the three-dimensional displaying achieved by using the three-dimensional maps little contributes to enhance reality and presence.

The present invention has been made to overcome the problem, and an object of the present invention is to provide an image generation device, an automatic generation method, a recording medium and a program which are suitable for automatically generating a three-dimensional image with enhanced reality.

### Means for solving the problem

An image generation device according to a first aspect of the present invention comprises a parts storage unit, a combination storage unit, an evaluation unit, an arrangement candidate storage unit, a parts selection unit and an image rendering unit, and is structured as follows.

Firstly, a parts storage unit stores a plurality of parts (for example, parts images of a ground, a wall, and a ceiling) to be minimum elements of a three-dimensional image. A combination storage unit stores combination information that prescribes a combination part configured by combining the parts. Then, an evaluation unit evaluates whether the prescribed combination part can be arranged on a predetermined target area for arrangement (for example, a cell or the like).
On the other hand, an arrangement candidate storage unit sequentially stores at least one combination part which is evaluated as being able to be arranged, as an arrangement candidate. A parts selection unit selects one combination part from the at least one combination part stored as an arrangement candidate. An image rendering unit renders a three-dimensional image based on the selected combination part.
In this way, combination parts are selected as arrangement candidates, and combination parts ultimately to be arranged is selected and a three-dimensional image is generated. Therefore, by composing a combination part by appropriately combining parts to be minimum elements, it becomes possible to generate a three-dimensional image with reality and presence also as a whole.
As a result of this, a three-dimensional image with enhanced reality can automatically be generated.

An image generation device according to a second aspect of the present invention comprises a parts storage unit, a combination storage unit, a contour generation unit, an evaluation unit, an arrangement candidate storage unit, a parts selection unit and an image rendering unit, and is structured as follows.

Firstly, the parts storage unit stores a parts storage unit that stores a plurality of parts to be minimum elements of a three-dimensional image (e.g. parts images including a ground, a wall, a ceiling). The combination storage unit stores combination information which prescribes a combination configured by combining the parts. Then, the contour generation unit generates a contour of a target area for arranging parts (for example, a cell or the like).
On the other hand, the evaluation unit evaluates whether the prescribed combination part can be arranged on a target area for arrangement in the generated contour. The arrangement candidate storage unit sequentially stores at least one combination part which is evaluated as being arrangeable, as an arrangement candidate. The parts selection unit selects one combination part from the at least one combination part stored as an arrangement candidate. An image rendering unit that renders a three-dimensional image in which the selected combination part is arranged on a target area for arrangement in the contour.
In this way, combination parts are selected as arrangement candidates, combination parts ultimately to be arranged are selected from these combination parts, and a three-dimensional image is generated. Therefore, by composing a combination part by appropriately combining parts to be minimum elements, a three-dimensional image with reality and presence can be generated also as a whole.
As a result of this, a three-dimensional image with enhanced reality can automatically be generated.

The evaluation unit may evaluate whether the defined combination part can be arranged on a target area for arrangement, with rotating the combination part along a predetermined rotation pattern, and
the arrangement candidate storage unit may store combination information and rotation angle of the combination part evaluated as being arrangeable, as an arrangement candidate.

The parts selection unit may select one combination part from the at least one combination part stored as an arrangement candidate, based on a predetermined selection pattern.

The evaluation unit may sequentially evaluate whether the prescribed combination part can be arranged on each target area for arrangement, in accordance with a table prescribing the order of evaluation of a target area for arrangement of the generated contour, for each target area for arrangement.

An automatic arrangement method according to a third aspect of the present invention is an automatic arrangement method using a parts storage unit (storing a plurality of parts to be minimum elements of a three-dimensional image), a combination storage unit (storing combination information defining a combination part composed by combining the parts) and an arrangement candidate storage unit (storing a combination part to be an arrangement candidate), the method comprises an evaluation step, a storage step, a parts selection step, and an image rendering step, and is structured as follows.

Firstly, in an evaluation step, whether the prescribed combination part can be arranged on a predetermined target area for arrangement (for example, a cell) is evaluated. In a storage step, at least one combination part is evaluated as being arrangeable to said arrangement candidate storage unit, as an arrangement candidate. In a parts selection step, one combination part is selected from the at least one combination part stored as the arrangement candidate. In an image rendering step, a three-dimensional image is rendered based on the selected combination part.
In this way, combination parts are selected as arrangement candidates, and combination parts to be ultimately arranged are selected and a three-dimensional image is generated. Therefore, by composing combination parts by appropriately combining parts to be minimum elements, a three-dimensional image with reality and presence can be generated.
As a result, a three-dimensional image with enhanced reality can automatically be generated.

A method for automatic arrangement according to the fourth aspect of the present invention comprises a parts storage unit (for storing a plurality of parts to be minimum elements of a three-dimensional image), a combination storage unit (for storing combination information that defines a combination part composed by combining the parts), and an arrangement candidate storage unit (to which a combination part to be arrangement candidate), the method comprises a contour generation step, an evaluation step, a storage step, a parts selection step, and image rendering step, and the method is structured as follows.

Firstly, in the contour generation step a contour of a target area for arrangement (for example, a cell) of a part is generated. In the evaluation step, it is evaluated whether the prescribed combination part can be arranged on the target area for arrangement of the generated contour. In the storage step, at least one combination part evaluated as arrangeable is stored to the arrangement candidate storage unit, as an arrangement candidate. In the parts selection step, one combination part is selected from the at least one combination part stored as an arrangement candidate. Then, in the image rendering step, a three-dimensional image in which the selected combination part is arranged on the target area for arrangement of the contour.
In this way, at least one combination part is selected and a combination part ultimately be arranged is selected from the at least one combination part, and a three-dimensional image is generated. Therefore, it is possible to generate a three-dimensional image by composing a combination part by combining the parts to be minimum elements, and a three-dimensional image with reality and presence also as a whole can automatically be generated.
As a result, it becomes possible to automatically generate a three-dimensional image with improved reality and presence.

A program according to a fifth aspect of the present invention is configured to cause a computer (including a game apparatus) to serve as the above-described image generation device.

This program can be recorded on a computer-readable information recording medium (recording medium) including a compact disk, a flexible disk, a hard disk, a magneto-optical disk, a digital video disk, a magnetic tape, and a semiconductor memory, etc.

The above-described program can be distributed and sold via a computer communication network, separately from the computer on which the program is executed.

### Effect of the invention

According to the present invention, a three-dimensional image with enhanced reality can be automatically generated.

### Brief Description of Drawings

[FIG. 1] An exemplary diagram showing a general configuration of a typical game device which realizes an image generation device according to an embodiment of the present invention.
[FIG. 2] An exemplary diagram showing a general configuration of an image generation device according to an embodiment of the present invention.
[FIG. 3A] An exemplary diagram showing one example of a contour shape generated by a contour generation unit.
[FIG. 3B] An exemplary diagram showing one example of a contour shape generated by the contour generation unit.
[FIG. 4A] An exemplary diagram showing one example of the parts model.
[FIG. 4B] An exemplary diagram showing one example of the parts model.
[FIG. 4C] An exemplary diagram showing one example of the parts model.
[FIG. 5A] An exemplary diagram showing one example of a parts model.
[FIG. 5B] An exemplary diagram showing one example of a parts model.
[FIG. 6A] An exemplary diagram showing one example of a parts model of wall.
[FIG. 6B] An exemplary diagram showing one example of a parts model of wall.
[FIG. 7A] An exemplary diagram showing a combination part of wall.
[FIG. 7B] An exemplary diagram showing one example of a combination part of wall.
[FIG. 8A] An exemplary diagram showing one example of a more complex combination part.
[FIG. 8B] An exemplary diagram showing one example of a more complex combination part.
[FIG. 9] An exemplary diagram showing one example of rotation patterns.
[FIG. 10] An exemplary diagram showing one example of selection pattern.
[FIG. 11] An exemplary diagram showing one example of a three-dimensional image to be generated.
[FIG. 12] A flowchart showing a flow of an automatic arrangement process executed by the image generation device.

### Explanation of Reference Numerals

- 100: game apparatus
- 101: CPU
- 102: ROM
- 103: RAM
- 104: interface
- 105: controller
- 106: external memory
- 107: DVD-ROM DRIVE
- 108: image processor
- 109: sound processor
- 110: NIC
- 200: image generation device
- 201: contour generation unit
- 202: contour information storage unit
- 203: parts model storage unit
- 204: combination data storage unit
- 205: parts arrangement evaluation unit
- 206: arrangement candidate storage unit
- 207: parts selection unit
- 208: image rendering unit

### Best Mode for Carrying Out the Invention

An embodiment of the present invention will be described below. While the following describes an embodiment in which the invention is adapted to a game device for the ease of understanding, the invention can also be adapted to information processing apparatuses, such as various computers, PDA and cellular phone. That is, the embodiment to be described below is given by way of illustration only, and does not limit the scope of the invention. Therefore, those skilled in the art can employ embodiments in which the individual elements or all the elements are replaced with equivalent ones, and which are also encompassed in the scope of the invention.

### (First embodiment)

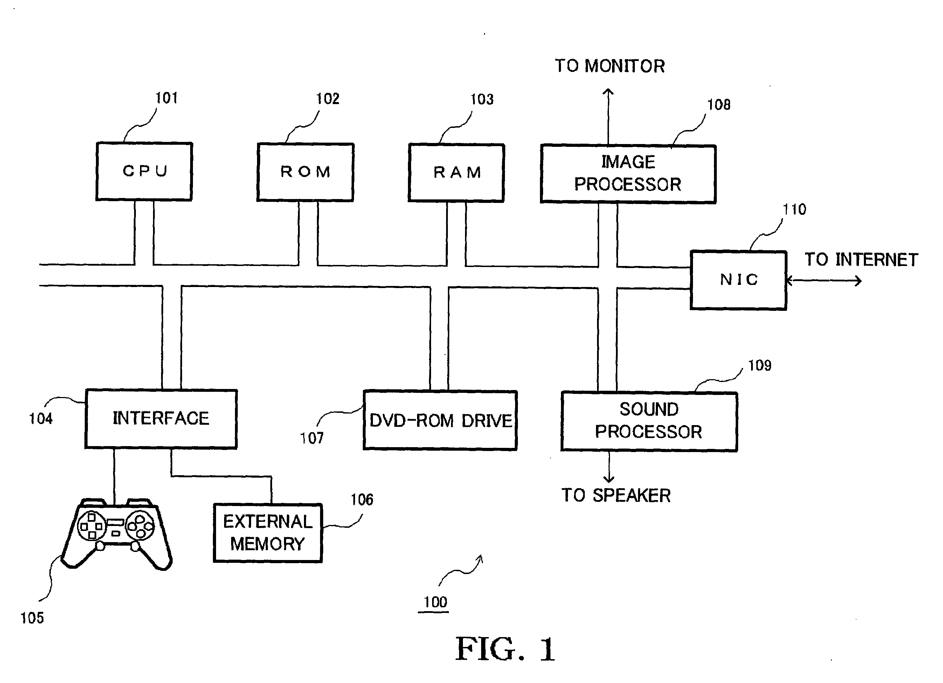

FIG. 1 is an exemplary diagram illustrating a schematic configuration of a typical game device which realizes an image generation device according to the embodiments of the present invention. The following description will be given referring to the diagram.

A game device 100 has a CPU (Central Processing Unit) 101, a ROM (Read Only Memory) 102, a RAM (Random Access Memory) 103, an interface 104, a controller 105, an external memory 106, a DVD (Digital Versatile Disk)-ROM drive 107, an image processor 108, a sound processor 109, an NIC (Network Interface Card) 110.

As a DVD-ROM storing a program and data for a game is loaded into the DVD-ROM drive 107 and the game device 100 is powered on, the program is executed to realize the image creating device of the embodiment.

The CPU 101 controls the general operation of the game device 100, and is connected to individual components to exchange a control signal and data therewith.

An IPL (Initial Program Loader) which is executed immediately after power-on is recorded in the ROM 102. As the IPL is executed, the program recorded in the DVD-ROM is read into the RAM 103 and is executed by the CPU 101. Recorded in the ROM 102 are a program for the operating system needed for the general operational control of the game device 100 and various kinds of data.

The RAM 103 temporarily stores data and a program. The program and data read from the DVD-ROM, and other data needed for progressing a game and chat communication is held in the RAM 103.

The controller 105 connected via the interface 104 accepts an operation input which is made when a user executes the game. For example, the controller 105 accepts an input, such as a string of characters (message), according to the operation input.

Data indicative of the progress status of the game, data of the log (record) of the chat communication and the like are stored in a rewritable manner in the external memory 106 connected detachably via the interface 104. As the user makes an instruction input via the controller 105, those data can adequately be recorded in the external memory 106.

The program for realizing the game and image data and sound data accompanying the game are recorded in the DVD-ROM to be loaded into the DVD-ROM drive 107. Under the control of the CPU 101, the DVD-ROM drive 107 performs a process of reading from the DVD-ROM loaded therein to read a necessary program and data, which are temporarily stored in the RAM 103 or the like.

The image processor 108 processes data read from the DVD-ROM by means of the CPU 101 and an image operation processor (not shown) the image processor 108 has, and then records the data in a frame memory (not shown) in the image processor 108. The image information recorded in the frame memory is converted to a video signal at a predetermined synchronous timing, which is in turn output to a monitor (not shown) connected to the image processor 108. This can ensure various image displays.

The image operation processor can enable fast execution of an overlay operation of a two-dimensional image, a transparent operation like α blending, and various kinds of saturate calculations.
It is also possible to enable fast execution of an operation of rendering polygon information which is arranged in virtual three-dimensional space and to which various kinds of texture information is added, by a Z buffer scheme to acquire an rendered image with a downward view of a polygon, arranged in the virtual three-dimensional space, from a predetermined view point position.

Further, as the CPU 101 and the image operation processor cooperate to be able to write a string of characters as a two-dimensional image in the frame memory or on each polygon surface according to font information which defines the shapes of characters. While the font information is recorded in the ROM 102, exclusive font information recorded in the DVD-ROM can be used as well.

The sound processor 109 converts sound data read from the DVD-ROM to an analog sound signal, and outputs the sound signal from a speaker (not shown) connected to the sound processor 109. Under the control of the CPU 101, the sound processor 109 generates effect sounds and music data to be generated during progress of the game, and outputs sounds corresponding thereto from the speaker.

The NIC 110 serves to connect the game device 100 to a computer communication network (not shown), such as the Internet. The NIC 110 includes an analog modem according to the 10 BASE-T/100 BASE-T standard which is used at the time of constructing a LAN (Local Area Network) or to be connected to the Internet using a telephone circuit, an ISDN (Integrated Services Digital Network) modem, an ADSL (Asymmetric Digital Subscriber Line) modem, a cable model to connect to the Internet using a cable television circuit, or the like, and an interface (not shown) which mediates between those modems and the CPU 101.

In addition, the game device 100 may be configured so as to achieve the same functions as the ROM 102, the RAM 103, the external memory 106, and the DVD-ROM or the like which is to be loaded into the DVD-ROM drive 107 by using a large-capacity external storage device, such as a hard disk.
It is also possible to employ a mode of connecting to a keyboard for receiving an edition input of a character string from the user, a mouse or the like for receiving designation of various positions and a selective input therefrom.

An ordinary computer (general-purpose personal computer or the like) can be used as the image creating device in place of the game device 100 of the embodiment. For example, the ordinary computer, like the game device 100, has a CPU, a RAM, a ROM, a DVD-ROM drive and an NIC, has an image processor having simpler functions than the game device 100, and can use a flexible disk, a magnetooptical disk, a magnetic 5 tape or the like in addition to a hard disk as an external storage device. The keyboard, mouse or the like, not a controller, is used as an input device. As the game program is executed after installation thereof, the computer serves as the image creating device.

### (Schematic configuration of the image generation device)

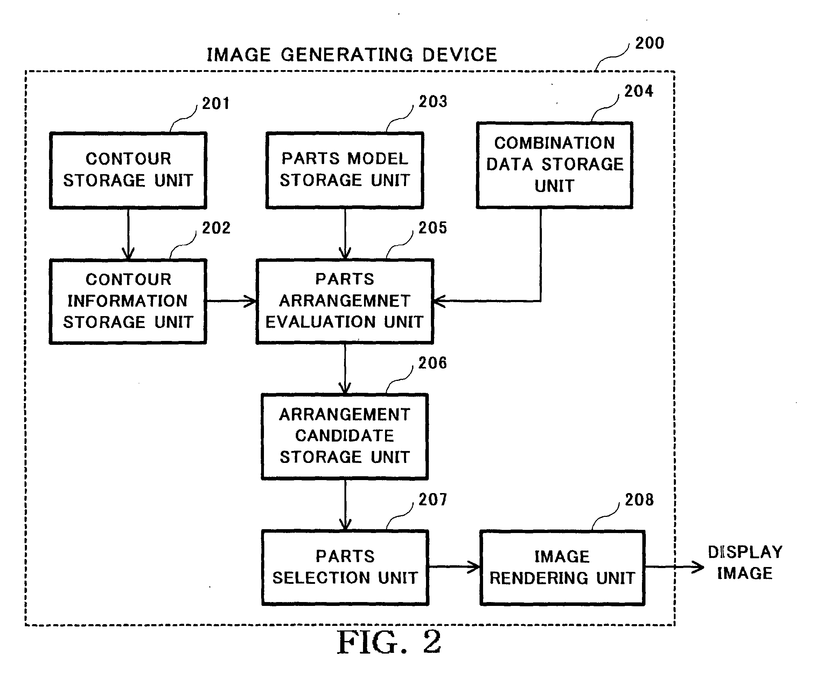

FIG. 2 is an exemplary diagram showing a schematic configuration of an image generation device according to the present embodiment. Hereafter the description is provided with reference to this figure.

The image generation device 200 comprises a contour generation unit 201, a contour information storage unit 202, a parts model storage unit 203, a combination data storage unit 204 and a parts arrangement evaluation unit 205, an arrangement candidate storage unit 206, a parts selection unit 207 and an image rendering unit 208.

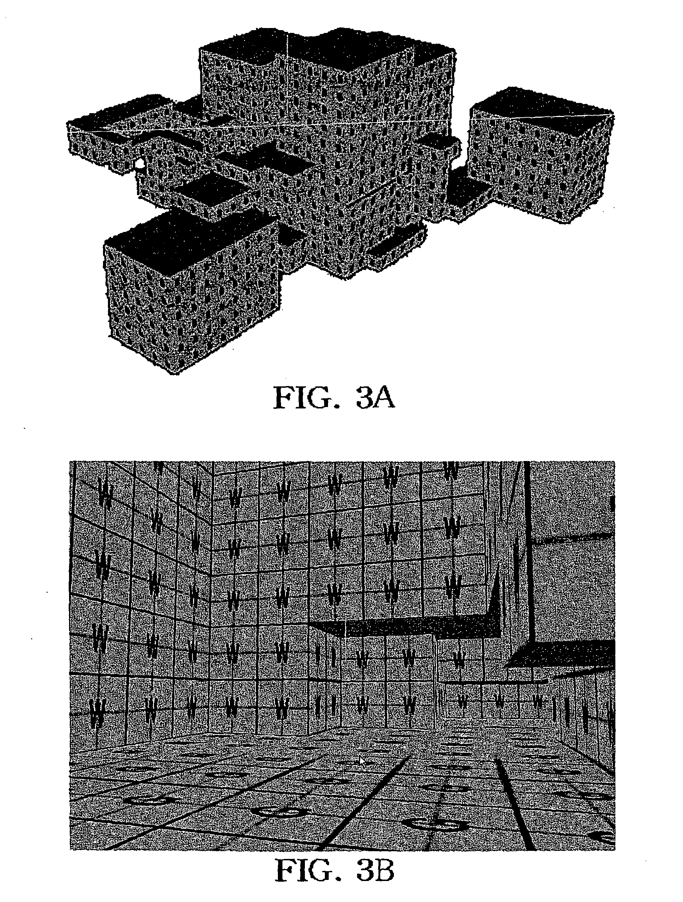

Firstly, the contour generation unit 201 generates a contour shape of the whole three-dimensional map (the whole stage). For example, the contour generation unit 201 generates a contour shape formed by cells of a plurality of kinds, including a wall cell, a ground cell and a ceiling cell, etc.
Specifically, the contour generation unit 201 generates a contour shape as shown in FIG. 3A. The inside (the interior or the like) of the contour shape comprises a wall cell (W), a ground cell (G) and a ceiling cell (C), etc. as shown in FIG. 3B.
The contour shapes as shown in FIGS. 3A and 3B are formed by, for example, deforming a contour shape of a prescribed arrangement by swapping. That is, the contour generation unit 201 appropriately deforms the contour shape by implementing swapping that selects two pieces from the prescribed arrangement and implements changing over a predetermined times.
The CPU 101 can serve as the contour generation unit 201 as described above.

Referring back to FIG. 2, the contour information storage unit 202 stores the contour shape of the whole stage generated by the contour generation unit 201. That is, the contour information storage unit 202 stores the contour shape constituted by each cell as shown in the above-mentioned FIGS. 3A and 3B.
The RAM 103 can serve as the contour information storage unit 202 as described above.

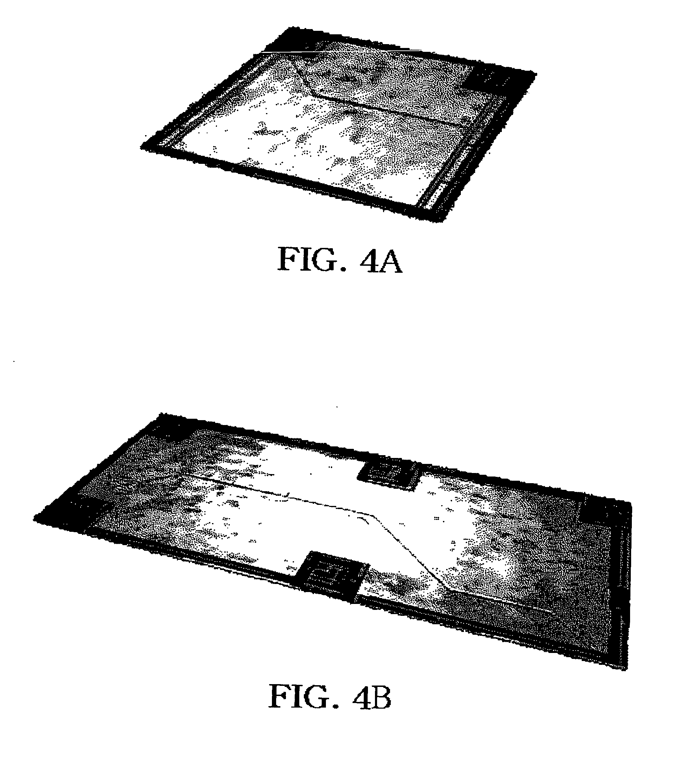

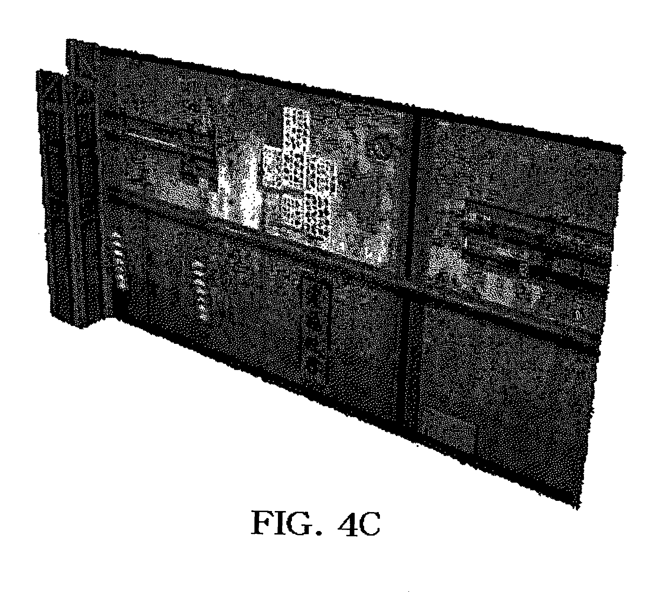

The parts model storage unit 203 stores a plurality of parts to be minimum elements of the three-dimensional image. That is, the parts model storage unit 203 stores parts models (model images) of a plurality of kinds, which are for being arranged in each of the cells of the above-described contour shape. For example, the parts model storage unit 203 stores parts models of a minimum unit, such as a ground, a wall, a ceiling, a block, a level, a handrail and a shade ..., etc.
In one example, the parts model storage unit 203 stores parts models (parts images) such as a ground and a wall as shown in FIGS. 4A through 4C. The parts models include a 1 x 1 (horizontal x vertical) part model as shown in FIG. 4A, which is one cell's worth, and 2×1 (horizontal x vertical) parts models as shown in FIGS. 4B and 4C, which are each two cell's worth.
A DVD-ROM mounted on the DVD-ROM DRIVE 107 and an external memory 106 can serve as the parts model storage unit 203.

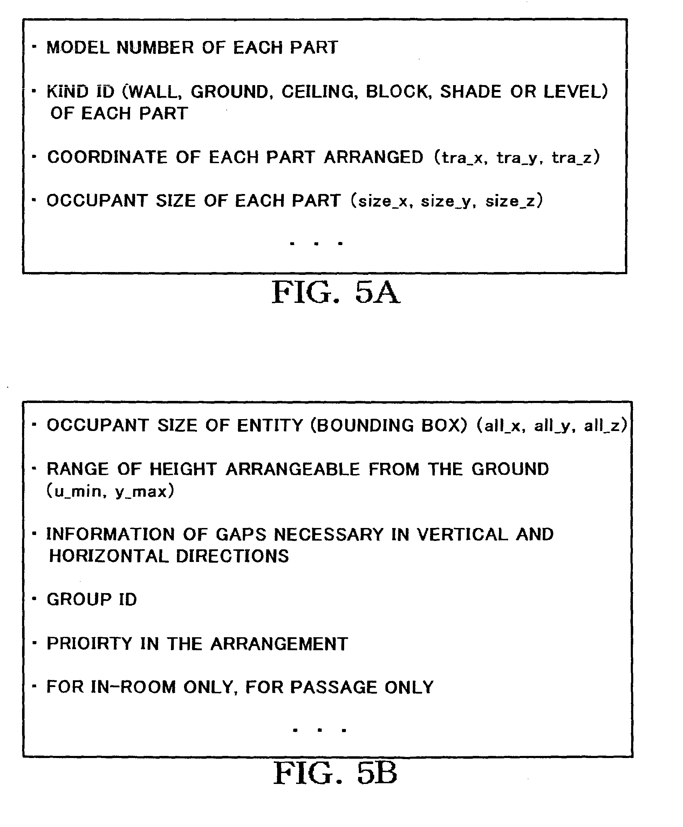

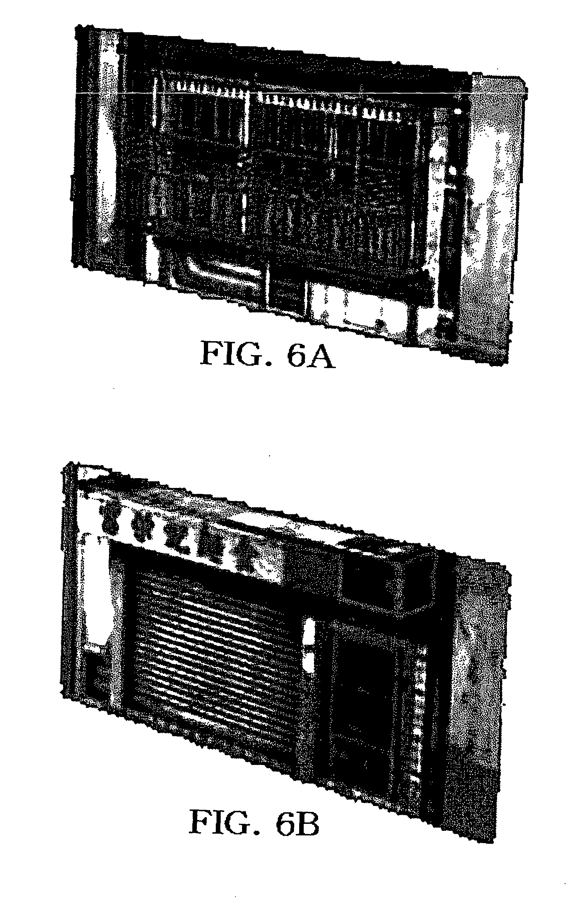

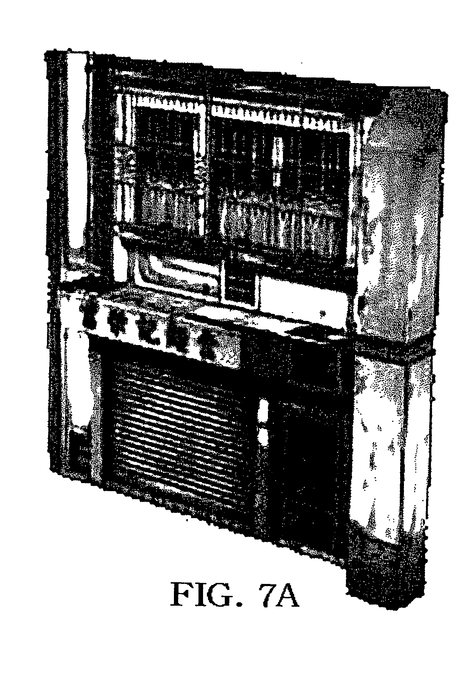

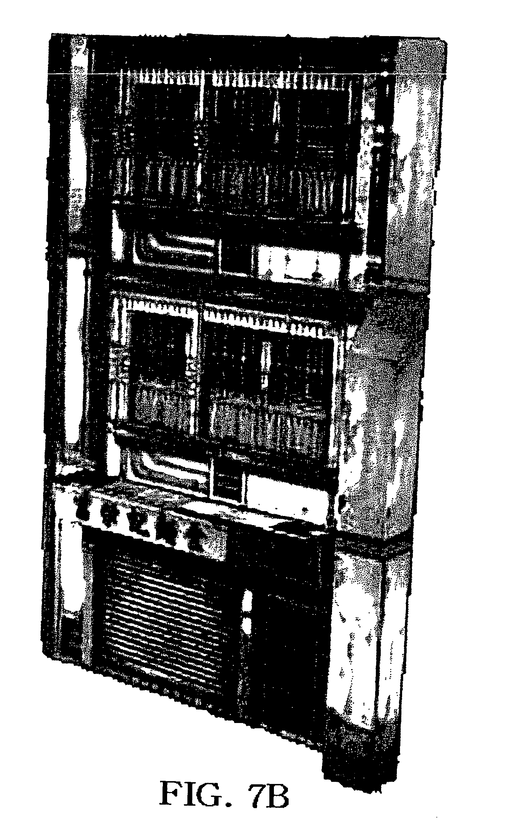

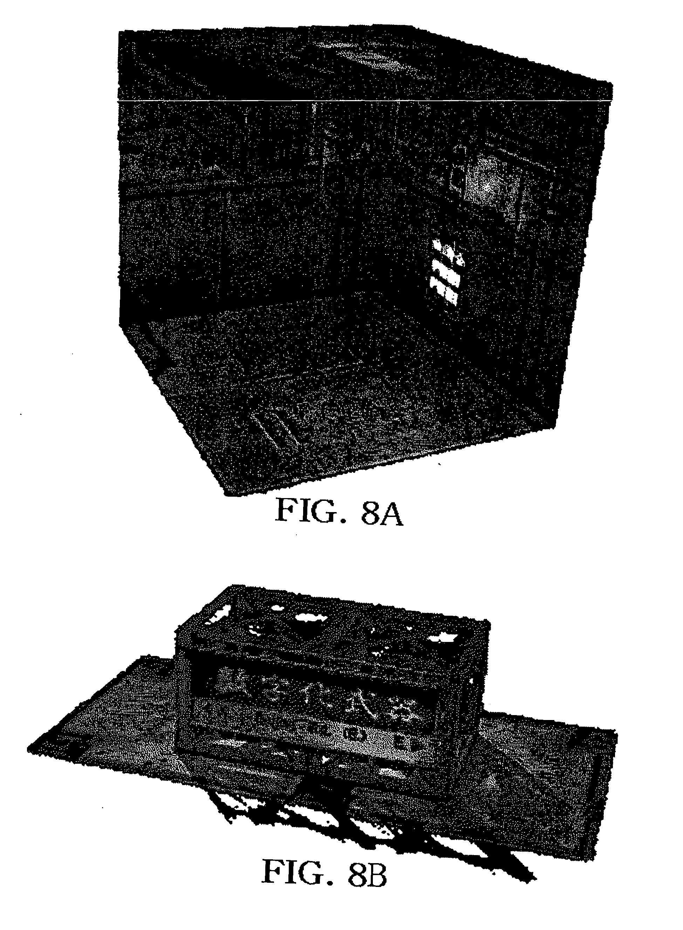

The combination data storage unit 204 stores various combination data prescribing combinations of parts models. This combination data is data of appropriate combination of above-mentioned each part model such as a ground, a wall and a ceiling, and is predetermined.
In one example, combination data comprises data, as shown in FIG. 5A, which relates to an element part, and data relating to the whole parts as shown in FIG. 5B.
Specifically, combination data is prescribed so that appropriate combination parts as shown in FIGS. 7A and 7B are formed by using parts models of a wall as shown in FIGS. 6A and 6B. That is, the parts model shown in FIG. 6B (a part model of a wall containing a shutter) is arranged on the ground floor without inconsistency, in the combination parts of FIGS. 7A and 7B. If, in this case, the part model of FIG. 6B is placed upstairs or in a higher floor, reality is spoiled. For avoiding this, the combination data prescribes combination parts constituted of an appropriate combination of parts (arrangement of parts models). Besides, the combination data includes data that prescribes complex combination part as shown in FIGS. 8A and 8B.
The combination part of FIG. 8A is constituted of parts models i.e. a ground, two walls and a ceiling. The combination part of FIG. 8B is constituted of parts models i.e. a ground, a block and a shade.
A DVD-ROM mounted on the DVD-ROM DRIVE 107 and an external memory 106 can serve as the combination data storage unit 204 as described above.

Referring back to FIG. 2, the parts arrangement evaluation unit 205 evaluates whether a combination part prescribed by the combination data can be arranged on each cell constituting the contour generated by the contour generation unit 201.
Specifically, the parts arrangement evaluation unit 205 evaluates whether a combination part can be arranged on each cell selected at random. For example, for a room constituted by cells of 20 x 20 x 20, parts arrangement evaluation unit 205 does not perform evaluation in the sequential order: (0,0,0) → (0,0,1) → (0, 0, 2) → (0,0,3)→ (20,20,19) → (20,20,20), but performs evaluation in a random order, for example: (5,1,12) → (9,15,5) → (4,3,1) → (17,0,5)→ ... → (10,8,13) → (9,15,17). That is, the evaluation of the cells on which to arrange a combination part progresses in a random order so as to prevent omission of combination data to be arranged.
More specifically, the parts arrangement evaluation unit 205 generates a random table that prescribes the order of evaluation of the cells, and evaluates whether a combination part can be arranged on each cell in accordance with the order of the random table.
The evaluation of ground cells may be performed with precedence, in a case where, if a combination part to be arranged on the ground cell is determined with 5 precedence, the flexibility of the combination parts to be arranged on a wall cell, a ceiling cell, etc. would be increased.

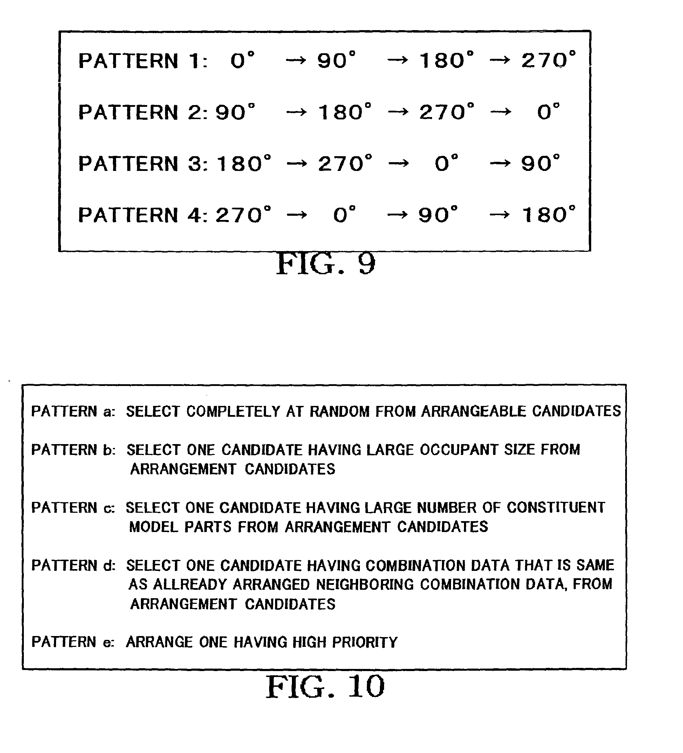

As for a specific method for evaluation, the parts arrangement evaluation unit 205 evaluates whether a combination part can be arranged on each cell, with rotating the combination part prescribed in the combination data by 90 degrees. The parts arrangement evaluation unit 205 determines whether the combination part can be arranged, with giving consideration to, for example, whether the cell has already been occupied by other parts, whether there is a necessary space, and whether the height of the combination part satisfies a limitation of an allowable height in which the part can be arranged, etc., individually.
In this process, for increasing the speed of evaluation, a plurality of rotation patterns as shown in FIG. 9 are determined in advance, and any of the rotation patterns is selected at random, and in accordance with the selected rotation pattern, it is evaluated whether the part can be arranged, with the combination part being rotated. Then, when it is evaluated that a combination part can be arranged at any one of the rotation angles, the parts arrangement evaluation unit 205 terminates the evaluation of the combination part.
In this way, when a combination part that can be arranged is found, the combination data and the rotation angle thereof is stored in the arrangement candidate storage unit 206.
The CPU 101 can serve as the parts arrangement evaluation unit 205 like this.

The arrangement candidate storage unit 206 stores combination data that is a candidate for arrangement and information including the rotation angle of the combination data. That is, the information (combination data and rotation angle) of a combination part that is evaluated to be arrangeable by the above-described parts arrangement evaluation unit 205 is stored as a candidate to be arranged.
The RAM 103 can serve as the arrangement candidate storage unit 206 as described above.

The parts selection unit 207 selects a combination part (combination data and a rotation angle) that is ultimately to be arranged on each cell, from the combination data stored in the arrangement candidate storage unit 206. That is, any one of the combination parts is selected from the arrangement candidates.
As for a specific method for selection, the parts selection unit 207 determines a plurality of selection patterns (selection conditions) as shown in FIG. 10, and determines any one of the selection patterns at random, and selects an ultimate combination part from the arrangement candidates (combination data and rotation angle) in accordance with the determined selection pattern.
On the determination of the selection pattern, it is possible that each selection pattern of FIG. 10 is suitably weighted so that the intention of the creators can readily be reflected and each selection pattern is determined by a predetermined provability distribution.
The CPU 101 can serve as the parts selection unit 207 as described above.

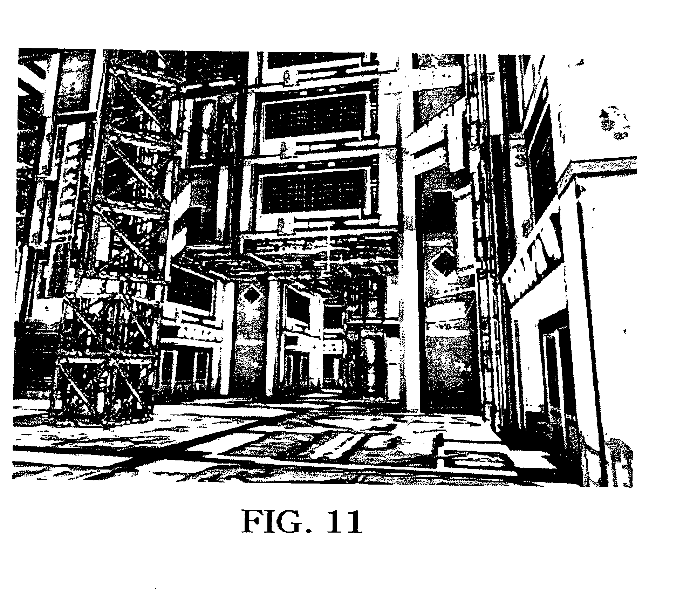

The image rendering unit 208 generates a three-dimensional image based on each combination part selected by the parts selection unit 207.
For example, the image rendering unit 208, selecting a view field in accordance with predetermined view point information, generates a three-dimensional image as shown in FIG. 11 based on each combination part selected by the parts selection unit 207.
This three-dimensional image is a combination part composed by appropriately combining parts models, and therefore, as a whole, the image is real and has presence.
The image processing unit 108 can serve as an image rendering unit 208.

### (Overview of operation of image generation device)

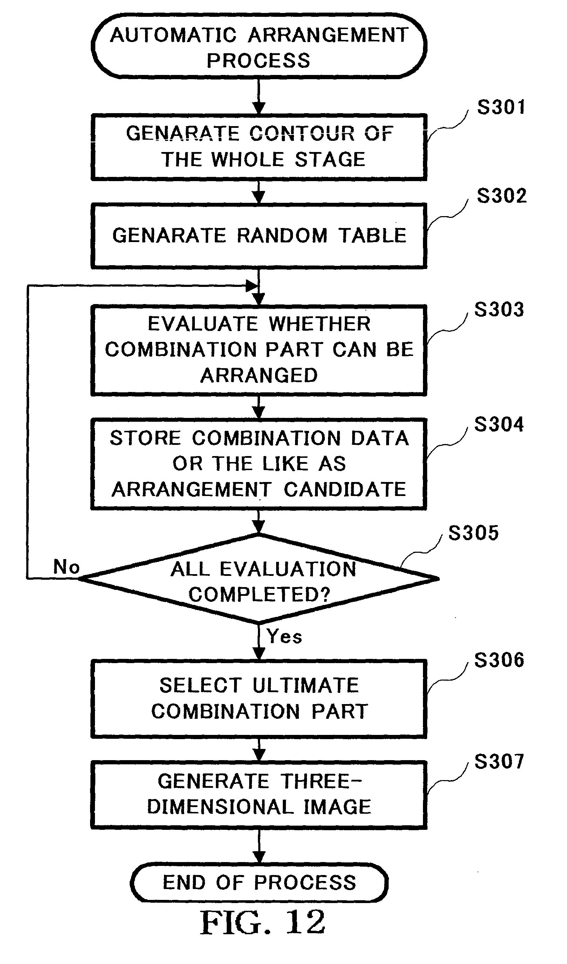

FIG. 12 is a flowchart showing the flow of the automatic arrangement process executed in the image generation device 200. In the following, the explanation is given with reference to this figure. This automatic arrangement process is started in response to switching of scenes in a role-playing game (in one example, at a time of approaching into a dungeon).

Firstly, the contour generation unit 201 generates a contour shape of the whole of a stage (step S301). For example, the contour generation unit 201 generates the contours as shown in FIGS. 3A and 3B by deforming a prescribed arrangement, by swapping.
Then, the contour information storage unit 202 stores the information of the generated contour shape.

The parts arrangement evaluation unit 205 generates a random table that prescribes a random order of evaluation (step S302). That is, the parts arrangement evaluation unit 205 generates a random table that prescribes a random order of evaluation for each cell that constitutes the generated contour.

The parts arrangement evaluation unit 205 specifies a cell in the order of the random table, and evaluates whether a combination part can be arranged on the cell (step S303).
That is, the parts arrangement evaluation unit 205 evaluates whether the combination part prescribed in the combination data can be arranged on each cell, with rotating the combination part by 90 degrees.

Then, when finding a combination part that can be arranged, the parts arrangement evaluation unit 205 stores the combination data or the like to an arrangement candidate storage unit 206 as an arrangement candidate (step S304). That is, information of combination data of arrangement candidate and the rotation angle or the like thereof is stored to the arrangement candidate storage unit 206.

The parts arrangement evaluation unit 205 determines whether the evaluation of all the cells is completed (step S305). That is, the parts arrangement evaluation unit 205 determines whether the evaluation for the cells from the first to the last in the order of the evaluations of the random table has been completed.
When the parts arrangement evaluation unit 205 determines that not all the cells have already been evaluated (step S305; No), it gets the process back to step S303, and performs the processes of the above-described steps S303 through S305 repeatedly.

On the other hand, when the parts arrangement evaluation unit 205 determines that all the cells have already been evaluated (step S305; Yes), the parts selection unit 207 selects a combination part, which is ultimately to be arranged, from the combination data stored to the arrangement candidate storage unit 206 (step S306). That is, any combination part (combination data and a rotation angle) is selected based on any of the selection patterns shown in the above-mentioned FIG. 10.

The image rendering unit 208 generates a three-dimensional image based on each combination part selected by the parts selection unit 207 (step S307). That is, the image rendering unit 208 generates a three-dimensional image as shown in FIG. 11.

In this way, combination parts are selected as arrangement candidates by the above-described automatic arrangement process. Of these arrangement candidates, a combination part ultimately to be arranged is selected and a three-dimensional image is generated. Therefore, it becomes possible to generate a three-dimensional image having reality and presence also in terms of the entity of the image, by composing a combination part by appropriately combining parts models that are to be minimum elements.
As a result, it becomes possible to automatically generate a three-dimensional image with enhanced reality.

### (Other embodiments)

In the above embodiment, the explanations are given of a case where combination data prescribing combination parts is stored in advance to the combination data storage unit 204. However, any combination part selected by a player or the like may additionally be stored to the combination data storage unit 204.

In the above embodiment, the explanations are given of a case where the parts arrangement evaluation unit 205 performs the evaluation with rotating the entity of the combination part, at the time of evaluating the combination part. However, the parts arrangement evaluation unit 205 needs not to rotate a part model in a case where such rotation would cause some type of problems for specific parts.
For example, one of such cases is when rotation of the parts model of the shade causes inconsistency for a combination part as shown in the mentioned FIG. 8B. In this case, the parts model of shade may not be rotated and may be fixed.

For the present application a priority is claimed on the basis of the Japanese Patent Application No. 2005-017224 and the entity of the application is incorporated herein by the reference.

### Industrial Applicability

As described above, according to the present invention, it is possible to provide an image generation device, an automatic arrangement method, a recording medium and a program which are suitable for automatically generating a three-dimensional image with enhanced reality.

## Claims

1. An image generation device comprising:
a parts storage unit that stores a plurality of parts to be minimum elements of a three-dimensional image;
a combination storage unit that stores combination information that prescribes a combination part configured by combining the parts;
an evaluation unit that evaluates whether the prescribed combination part can be arranged on a predetermined target area for arrangement,
an arrangement candidate storage unit that sequentially stores at least one combination part which is evaluated as being able to be arranged, as an arrangement candidate;
a parts selection unit that selects one combination part from the at least one combination part stored as an arrangement candidate; and
an image rendering unit that renders a three-dimensional image based on the selected combination part.

2. An image generation device comprising:
a parts storage unit that stores a plurality of parts to be minimum elements of a three-dimensional image;
a combination storage unit that stores combination information which prescribes a combination configured by combining the parts;
a contour generation unit that generates a contour of a target area for arranging parts;
an evaluation unit that evaluates whether the prescribed combination part can be arranged on a target area for arrangement in the generated contour;
an arrangement candidate storage unit that sequentially stores at least one combination part which is evaluated as being arrangeable, as an arrangement candidate;
a parts selection unit that selects one combination part from the at least one combination parts stored as an arrangement candidate; and
an image rendering unit that renders a three-dimensional image in which the selected combination part is arranged on a target area for arrangement in the contour.

3. The image generation device according to claim 1 or 2, wherein
said evaluation unit evaluates whether the prescribed combination part can be arranged on a target area for arrangement, with rotating the combination part along a predetermined rotation pattern; and
said arrangement candidate storage unit stores combination information and rotation angle of the combination part evaluated as being arrangeable, as an arrangement candidate.

4. The image generation device according to claim 1 or 2, wherein
said parts selection unit selects one combination part from the at least one combination part stored as an arrangement candidate, based on a predetermined selection pattern.

5. The image generation device according to claim 2,
wherein said evaluation unit sequentially evaluates whether the prescribed combination part can be arranged on each target area for arrangement, in accordance with a table prescribing the order of evaluation of a target area for arrangement of the generated contour, for each target area for arrangement.

6. A method for automatic arrangement, said method using a parts storage unit, a combination storage unit and an arrangement candidate storage unit, in which said parts storage unit stores a plurality of parts to be minimum elements of a three-dimensional image, a combination storage unit stores combination information prescribing the combination part composed by combining the parts, and the arrangement candidate storage unit stores a combination part to be an arrangement candidate, said method comprising:
an evaluation step of evaluating whether the prescribed combination part can be arranged on a predetermined target area for arrangement;
a storage step of storing at least one combination part evaluated as being arrangeable to said arrangement candidate storage unit, as an arrangement candidate;
a parts selection step of selecting one combination part from the at least one combination part stored as the arrangement candidate; and
an image rendering step of rendering a three-dimensional image based on the selected combination part.

7. A method for automatic arrangement, said method using a parts storage unit, a combination storage unit and an arrangement candidate storage unit, in which said parts storage unit stores a plurality of parts to be minimum elements of a three-dimensional image, said combination storage unit stores combination information prescribing a combination part composed by combining the parts, said arrangement candidate storage unit stores a combination part to be an arrangement candidate, said method comprising:
a contour generation step of generating a contour of a target area for arrangement of a part,
an evaluation step of evaluating whether the prescribed combination part can be arranged on a target area for arrangement in the generated contour;
a storage step of storing at least one combination part evaluated as being arrangeable, to said arrangement candidate storage unit, as an arrangement candidate;
a parts selection step of selecting one combination part from the at least one combination part which is stored as arrangement candidates; and
an image rendering step of rendering a three-dimensional image in which the selected combination part is arranged on the target area for arrangement in the contour.

8. A recording medium storing a program for causing a computer to serve as:
a parts storage unit that stores a plurality of parts to be minimum elements of a three-dimensional image;
a combination storage unit that stores combination information prescribing a combination part composed by combining the parts;
an evaluation unit that evaluates whether the prescribed combination part can be arranged on a predetermined target area for arrangement;
an arrangement candidate storage unit that sequentially stores at least one combination part which is evaluated as being arrangeable, as an arrangement candidate;
a parts selection unit that selects one combination part from the at least one combination part stored as an arrangement candidate; and
an image rendering unit that renders a three-dimensional image, based on the selected combination part.

9. A recording medium storing a program for causing a computer to serve as:
a parts storage unit that stores a plurality of parts to be minimum elements of a three-dimensional image;
a combination storage unit that stores combination information prescribing a combination part composed by combining the parts;
a contour generation unit that generates a contour of a target area for arrangement of a part;
an evaluation unit that evaluates whether the prescribed combination part can be arranged on a target area for arrangement in the generated contour;
an arrangement candidate storage unit that sequentially stores at least one combination part which is evaluated as being arrangeable;
a parts selection unit that selects one combination part from the at least one combination part stored as an arrangement candidate;
an image rendering unit that renders a three-dimensional image in which the selected combination part is arranged on a target area for arrangement of the contour.

10. A program for causing a computer to serve as:
a parts storage unit that stores a plurality of parts to be minimum elements of a three-dimensional image;
a combination storage unit that stores combination information that prescribes a combination part configured by combining the parts;
an evaluation unit that evaluates whether the prescribed combination part can be arranged on a predetermined target area for arrangement,
an arrangement candidate storage unit that sequentially stores at least one combination part which is evaluated as being able to be arranged, as an arrangement candidate;
a parts selection unit that selects one combination part from the at least one combination part stored as the arrangement candidates; and
an image rendering unit that renders a three-dimensional image based on the selected combination part.

11. A program for causing a computer to serve as:
a parts storage unit that stores a plurality of parts to be minimum elements of a three-dimensional image;
a combination storage unit that stores combination information that prescribes a combination part configured by combining the parts;
a contour generation unit that generates a contour of a target area for arrangement of a part;
an evaluation unit that evaluates whether the prescribed combination part can be arranged on a predetermined target area for arrangement of the contour,
an arrangement candidate storage unit that sequentially stores at least one combination part which is evaluated as being able to be arranged, as an arrangement candidates;
a parts selection unit that selects one combination part from the at least one combination part stored as an arrangement candidate; and
an image rendering unit that renders a three-dimensional image based on the selected combination part.
